# EUROPEAN PATENT APPLICATION

(11) **EP 4 843 821 A1**
(43) Date of publication of application: **25.11.2026**
(21) Application number: 26179623.9
(22) Date of filing: 19.05.2026
(51) Int. Cl.: B60L 53/65, B60L 3/12, B60L 53/14, B60L 53/30, B60L 53/50, B60L 53/62, B60L 53/63, B60L 53/64, B60L 53/66, B60L 53/67, B60L 53/68, B60L 55/00, B60L 58/12

(54) **SYSTEM AND METHOD FOR ELECTRIC VEHICLE CHARGING**

(30) Priority: 22.05.2025 US 202563810604 P
(71) Applicant: Cummins Inc., Columbus, IN 47201 (US)
(72) Inventor: BORHAN, Hoseinali, Bloomington, 47401 (US); NUGROHO, Sebastian, Columbus, 47201 (US)
(74) Representative: Cleveland Scott York

(57) **Abstract**

A computing system obtains, from a first source, a request to initiate a charging operation with respect to an electric vehicle (EV) operated by a fleet operator via a charging station of a charging facility operated by a charge point operator. The request includes at least a vehicle identifier of the EV. The computing system obtains, from a second source, vehicle profile data for the EV over a communications network based on the vehicle identifier. The vehicle profile data identifies at least an operating schedule of the EV as defined by the fleet operator. The computing system selects a charge profile for the EV from a plurality of supported charge profiles based, at least in part, on the operating schedule and a state of charge of the EV. The computing system outputs the charge profile selected for the EV.

## Description

### BACKGROUND

Electric vehicles rely on charging stations to periodically charge their batteries. Charging operations between an electric vehicle and a charging station can be defined, at least in part, by a charge profile that specifies a charging rate at which electrical power is supplied to the vehicle. Operators of electric vehicles may use a variety of different charging stations to charge their vehicles, including charging stations that are under their own exclusive control, and charging stations that are operated by and under the control of third-party charge point operators.

### SUMMARY

A computing system and a method performed by a computing system are disclosed. According to an example, a computing system that includes one or more computing devices obtains, from a first source, a request to initiate a charging operation with respect to an electric vehicle (EV) operated by a fleet operator via a charging station of a charging facility operated by a charge point operator. The request includes at least a vehicle identifier of the EV. The computing system obtains, from a second source, vehicle profile data for the EV over a communications network based on the vehicle identifier. The vehicle profile data identifies at least an operating schedule of the EV as defined by the fleet operator. The computing system selects a charge profile for the EV from a plurality of supported charge profiles based, at least in part, on the operating schedule and a state of charge of the EV. The computing system outputs the charge profile selected for the EV.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic diagram of an example operating environment.
FIG. 2 is a flow diagram depicting an example method that can be performed by a computing system that includes one or more computing devices.
FIG. 3 is a schematic diagram depicting aspects of an example computing system that can perform the method of FIG. 2.
FIG. 4 is a schematic diagram depicting an example EV charging system of the operating environment of FIG. 1 by which the method of FIG. 2 can be performed.
FIG. 5 is a schematic diagram depicting another example EV charging system of the operating environment of FIG. 1 by which the method of FIG. 2 can be performed.
FIG. 6 is a schematic diagram depicting another example EV charging system of the operating environment of FIG. 1 by which the method of FIG. 2 can be performed.

### DETAILED DESCRIPTION

As briefly introduced above, a computing system and a method performed by a computing system are disclosed. The computing system obtains, from a first source, a request to initiate a charging operation with respect to an electric vehicle (EV) operated by a fleet operator via a charging station of a charging facility operated by a charge point operator. The request includes at least a vehicle identifier of the EV. The computing system obtains, from a second source, vehicle profile data for the EV over a communications network based on the vehicle identifier. The vehicle profile data identifies at least an operating schedule of the EV as defined by the fleet operator. The computing system selects a charge profile for the EV from a plurality of supported charge profiles based, at least in part, on the operating schedule and a state of charge of the EV identified by the request or by the vehicle profile data. The computing system outputs the charge profile selected for the EV.

As the backbone of logistics and transportation, medium- and heavy-duty electric vehicles (MHDEVs) may play a significant role in sustainability and clean mobility. One challenge associated with EV charging in general, and MHDEV charging in particular, is the electric grid capacity and capability. The requirements and operations of MHDEV charging can differ from those of light passenger EVs due to factors such as rigid operational schedule, larger battery size, and higher charging power requirements. For example, MHDEVs are typically charged in concentrated localized areas such as depots and could burden the local electric grid during peak times.

To reduce utility grid loads, EV charging facilities are typically connected to local distributed energy resources (DERs), and this prompts charge point operators to coordinate further with the site energy management system (EMS). Moreover, communication between fleet operators and charge point operators is also not well-developed in the industry. For MHDEV applications, there is a need for a new charging solution that exceeds the capabilities currently available for coordinated EV charging. However, there does not appear to be an end-to-end communication solution that facilitates seamless cooperation among EVs, charging stations, EMS, charge point operators, fleet operators, and DSOs.

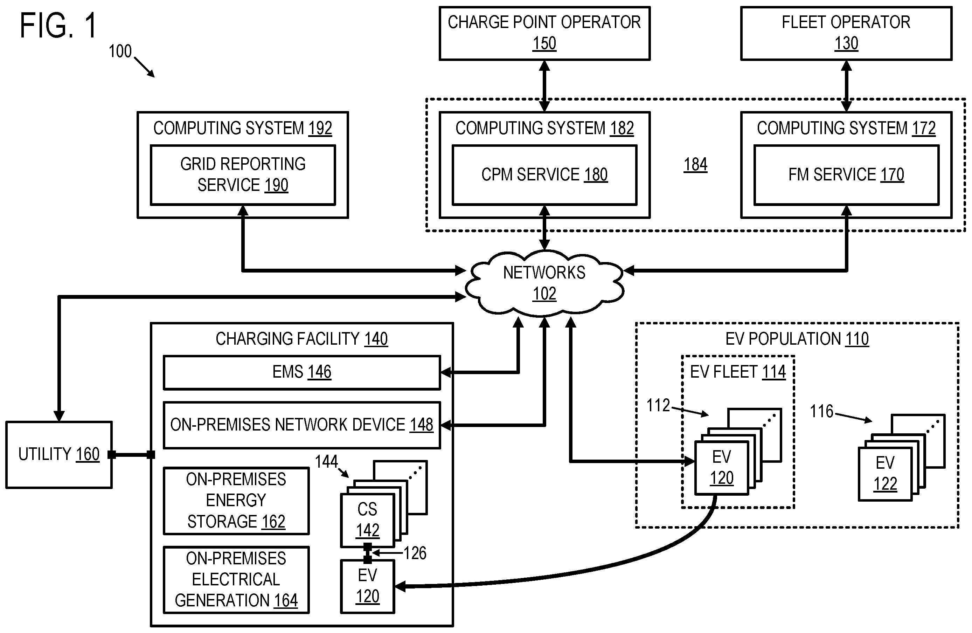

FIG. 1 is a schematic diagram of an example operating environment 100. In the example of FIG. 1, operating environment 100 includes an EV population 110 that contains a first group of EVs 112 that forms part of an EV fleet 114, and a second group of EVs 116 that does not form part of EV fleet 114.

First group of EVs 112 of EV fleet 114 includes a plurality of EVs, an example EV of which is schematically depicted in FIG. 1 as EV 120. The term "electric vehicle" or "EV" as used herein encompasses vehicles for which electricity is the sole source of on-board energy for providing vehicle propulsion via an electric motor, as well as hybrid electric vehicles (HEVs) for which an additional source of on-board energy in the form of a fuel (e.g., gasoline, diesel, etc.) can be used to power another on-board propulsion source (e.g., an engine) that can augment or otherwise supplement propulsion provided by the electric motor.

First group of EVs 112 of EV fleet 114 includes a plurality of EVs. For example, first group of EVs 112 of EV fleet 114 can include tens, hundreds, thousands, or more EVs. In at least some examples, some or all of the EVs of the first group of EVs 112 of fleet 114 can take the form of medium-duty and/or heavy-duty EVs (e.g., trucks, buses, cargo vans, construction vehicles, etc.). However, it will be understood that some or all of the EVs of the first group of EVs 112 of fleet 114 can take other suitable forms, including light-duty and/or private passenger EVs (e.g., cars, light-duty vans, light-duty trucks, motorcycles, etc.).

EV fleet 114, including first group of EVs 112 is operated by a fleet operator 130, depicted schematically in FIG. 1. Fleet operator 130 can exercise operational control over EVs of EV fleet 114, including the first group of EVs 112. As an example, fleet operator 130 can exercise operational control over EV fleet 114 through one or more human personnel that act as agents of the fleet operator. Examples of operational control by fleet operator 130 over EV fleet 114 can include operational scheduling, electrical charging scheduling, and maintenance scheduling. By contrast, second group of EVs 116 can be operated by a variety of different entities that differ from fleet operator 130. An example EV of second group of EVs 116 is schematically depicted in FIG. 1 as EV 122.

Operating environment 100 further includes a charging facility 140 that can provide charging operations with respect to EVs of EV population 110, including at least first EV group 112 of EV fleet 114. Charging facility 140 is operated by a charge point operator 150, depicted schematically in FIG. 1. Charge point operator 150 can exercise operational control over charging facility 140. As an example, charge point operator 150 can exercise operational control over charging facility 140 through one or more human personnel that act as agents of the charging facility. It will be understood that charge point operator 150 is a different operational entity from fleet operator 130 in the example of FIG. 1.

In FIG. 1, example EV 120 of EV fleet 114 travels to charging facility 140 to engage in a charging operation 126 in which EV 120 is charged by electrical energy supplied to the EV via a charging station of the charging facility. Alternatively, charging operation 126 can include EV 120 being discharged via a charging station of the charging facility in which electrical energy is supplied by the EV to the charging station. Other EVs of EV population 110 can also travel to charging facility 140 to engage in respective charging operations that include charging and/or discharging of the EVs. In at least some examples, charge point operator 150 provides charging operations that include charging of EVs in exchange for financial remuneration paid by the operators of the EVs. For example, fleet operator 130 can pay financial remuneration to charge point operator 150 to charge EV 120 at charging facility 140 as part of charging operation 126. As another example, charge point operator 150 can pay financial remuneration to fleet operator 130 to discharge electrical energy from EV 120 to charging facility 140 as part of charging operation 126.

In the example of FIG. 1, EV 120 engages in charging operation 126 via charging station (CS) 142 of charging facility 140. Charging facility 140 can include a plurality of charging stations 144 of which charging station 142 is an example.

Charging facility 140 can further include or be associated with an energy management system (EMS) 146 by which operations associated with energy usage and production are managed at the charging facility, including charging operations provided to EVs via the plurality of charging stations 144. EMS 146 can include electricity distribution, processing, and switching hardware, as an example. In some examples, EMS 146 includes a computing system of one or more computing devices that implement an energy management service. The computing system of EMS 146 can take the form of one or more controller devices, as an example. EMS 146 can be located on-premises of charging facility 140. As another example, portions of EMS 146 can be located off-premises of charging facility 140. For example, the computing system of EMS 146 can be located off-premises from charging facility 140, and can communicate with equipment located on-premises at charging facility 140 via one or more of communications networks 102.

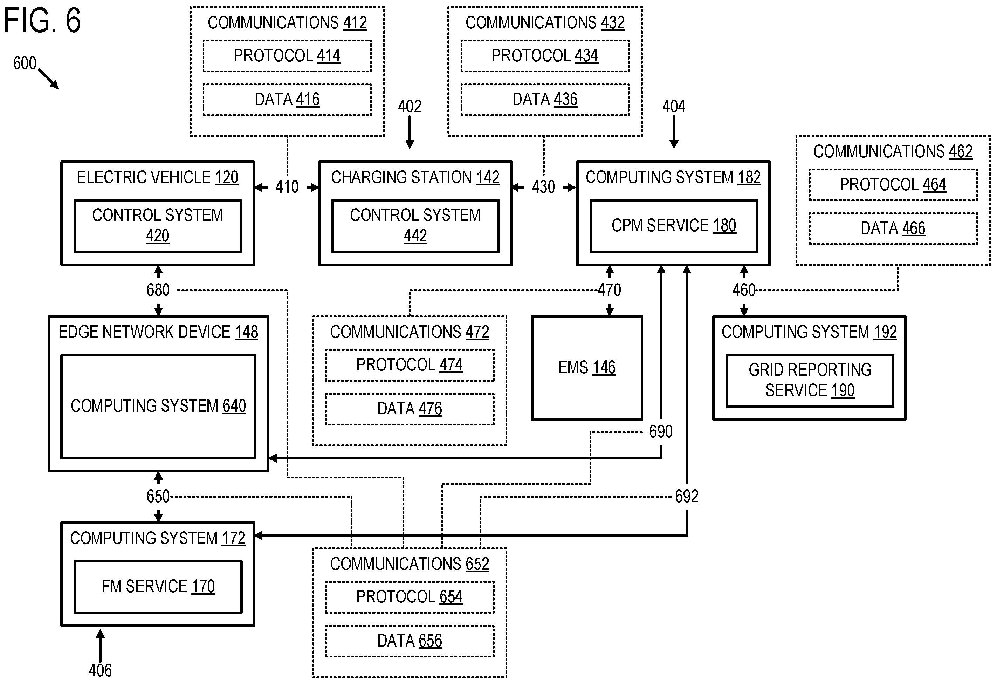

Charging facility 140 can further include one or more on-premises network devices 148 that coordinate management of charging operations with respect to EVs at the charging facility, as described in further detail herein with reference to FIG. 6.

Charging facility 140 can receive electricity from off-premises energy sources, such as electrical utility 160. Additionally or alternatively, charging facility 140 can include on-premises energy storage 162 (e.g., batteries) and/or on-premises electrical generation 164 (e.g., solar, wind, hydro, etc.) that is located at the charging facility. Electricity obtained from one or more of utility 160, on-premises energy storage 162, and on-premises electrical generation 164 can be supplied to EVs via the plurality of charging stations 144 as part of a charging operation. Additionally, electricity obtained at charging facility 140 by discharging EVs as part of a charging operation can be stored at on-premises energy storage 162, utilized to charge other EVs via charging stations, and/or provided to utility 160 for use at other electrical loads connected to the utility.

Operating environment 100 further includes a fleet management (FM) service 170 implemented by a computing system 172. Fleet management service 170 can take the form of one or more programs executed by computing system 172, as an example. Fleet management service 170 can be used by fleet operator 130 to manage operations of EV fleet 114, including charging operations with respect to EV fleet 114 that are performed at charging facilities, such as charging facility 140 of FIG. 1. As an example, an operating schedule of EV fleet 114 can be defined by fleet operator 130 via fleet management service 170.

In the example of FIG. 1, computing system 172 is remotely located off-premises from charging facility 140. In some examples, computing system 172 can be located at a facility of fleet operator 130. In other examples, computing system 172 can take the form of a server system located at a data center. In still further examples, one or more computing devices of computing system 172 can be located on-premises at a facility of fleet operator 130, and one or more computing devices of computing system 172 can be located off-premises from the facility of fleet operator 130 in a distributed computing configuration.

Operating environment 100 further includes a charge point management (CPM) service 180 implemented by a computing system 182. Charge point management service 180 can take the form of one or more programs executed by computing system 182, as an example. Charge point management service 180 can be used by charge point operator 150 to manage operations of charging facility 140, as described in further detail herein. In some examples, computing system 182 can be located on-premises at charging facility 140. For example, computing system 182 can form part of on-premises network devices 148 and/or EMS 146 of charging facility 140. In other examples, computing system 182 can be remotely located off-premises from charging facility 140. For example, computing system 182 can take the form of a server system located at a data center. In still further examples, one or more computing devices of computing system 182 can be located on-premises at charging facility 140, and one or more computing devices of computing system 182 can be located off-premises from charging facility 140 in a distributed computing configuration.

In some examples, charge point management service 180 and fleet management service 170 can each form part of an integrated service 184, depicted schematically in FIG. 1 using broken lines. Integrated service 184, including charge point management service 180 and fleet management service 170 can be hosted at a server system, as an example.

Operating environment 100 further includes a grid reporting service 190 implemented by a computing system 192. In some examples, grid reporting service 190 can be operated by a distribution system operator (DSO) or aggregator. Grid reporting service 190 can report grid energy profile data to other components of operating environment 100, as described in further detail herein. As examples, grid energy profile data reported by service 190 can identify a unit cost or rate for electricity supplied to the charging facility by a utility, a unit cost or rate for electricity supplied by the charging facility to the utility, and an electricity demand on an electrical grid by which electricity is supplied to the charging facility.

Communications between or among components of operating environment 100 can be provided via one or more communications networks 102, depicted schematically in FIG. 1. For example, communications between or among EVs of EV fleet 114, fleet management service 170, charge point management service 180, grid reporting service 190, EMS 146, on-premises network devices 148, and utility 160 can be provided via networks 102. Networks 102 can include one or more wide area networks (e.g., the Internet or a portion thereof). Networks 102 can further include one or more local area networks, as described in further detail herein.

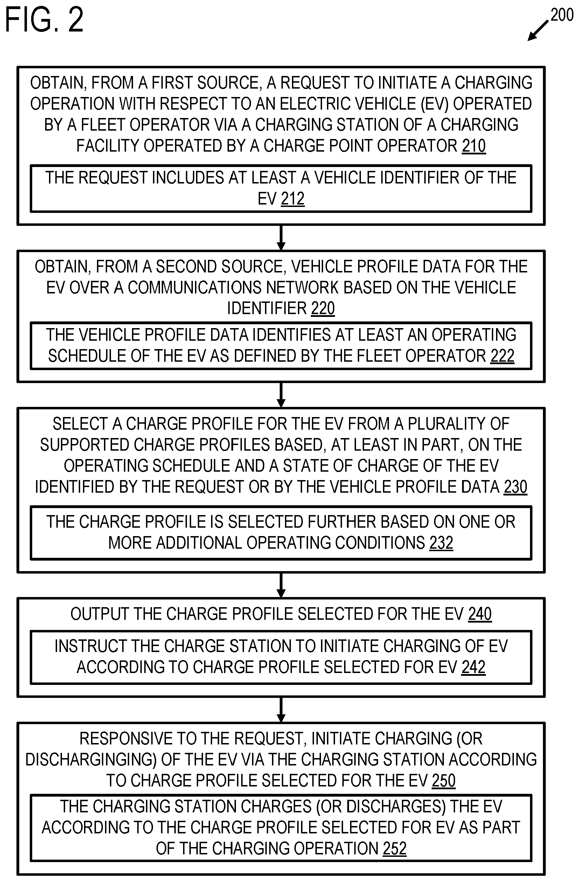

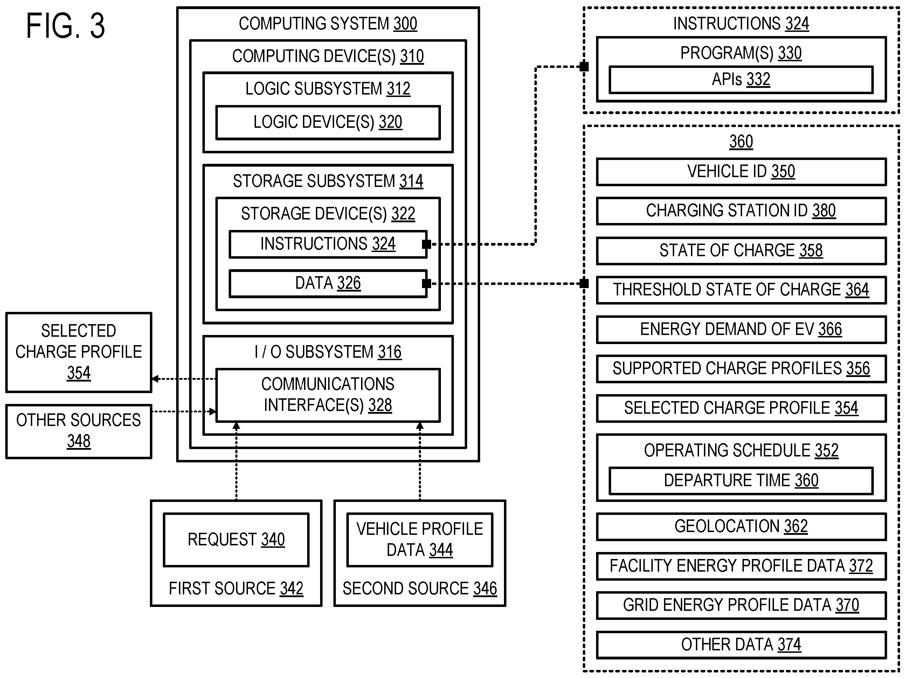

FIG. 2 is a flow diagram depicting an example method 200 that can be performed by a computing system that includes one or more computing devices. Computing system 182 of FIG. 1 is one example of a computing system that can perform method 200 of FIG. 2. In this example, method 200 can be performed by computing system 182 executing charge point management service 180. As another example, method 200 of FIG. 2 can be performed by a computing system executing integrated services 184 of FIG. 1 that includes charge point management service 180 and fleet management service 170. As yet another example, method 200 can be performed by a computing system that forms part of a charging station (e.g., CS 142) of FIG. 1. Aspects of these examples will be described in further detail with reference to FIGS. 3 - 6.

Referring to FIG. 2, at 210, the method includes obtaining, from a first source, a request to initiate a charging operation with respect to an electric vehicle (e.g., 120 of FIG. 1) operated by a fleet operator (e.g., 130 of FIG. 1) via a charging station (e.g., 142 of FIG. 1) of a charging facility (e.g., 140 of FIG. 1) operated by a charge point operator (e.g., 150 of FIG. 1). The first source can be a local source with respect to the computing system that performs method 200 or a remote source that is accessible to the computing system via a communications network. Obtaining the request from the first source can be performed via a first communications network, in some examples. The request can be formatted according to a first communications protocol, examples of which are described in further detail herein. As examples, the first source can be the EV, the charging station, another device or service (e.g., 146 or 148 of FIG. 1) located on-premises at the charging facility, fleet management service 170 of FIG. 1, or charge point management service 180 of FIG. 1.

As indicated at 212, the request includes at least a vehicle identifier of the EV. The request can further include additional data, as described in further detail herein. As one example, the request can further include a charging station identifier of the charging station.

At 220, the method includes obtaining, from a second source, vehicle profile data for the EV over a communications network based on the vehicle identifier. The second source in this example differs from the first source from which the request was obtained at 210. As examples, the second source can be the EV, the charging station, another device or service (e.g., 146 or 148 of FIG. 1) located on-premises at the charging facility, fleet management service 170 of FIG. 1, or charge point management service 180 of FIG. 1. The second source can be a local source with respect to the computing system that performs method 200 in the case of the first source being a remote source. Alternatively, the second source can be a remote source in the case of the first source being a local source. Obtaining the vehicle profile data from the second source can be performed via a second communications network that differs from the first communications network by which the request was obtained. In some examples, the vehicle profile data can be formatted according to a second communications protocol that differs from the first communications protocol of the request obtained at 210.

As indicated at 222, the vehicle profile data identifies at least an operating schedule of the EV as defined by the fleet operator. The vehicle profile data can further additional data, as described in further detail herein.

At 230, the method includes selecting a charge profile for the EV from a plurality of supported charge profiles based, at least in part, on the operating schedule and a state of charge of the EV. The plurality of supported charge profiles can include charge profiles that are supported by both the charging station and the EV. Accordingly, the charge profile that is selected from the plurality of supported charge profiles at 230 can define a particular charging rate of a plurality of charging rates that can be used to charge (or discharge) the EV via the charging station. Additionally, in the case of bidirectional charging, the charge profile can define a direction of the transfer of electrical energy as part of the charging operation, including from the charging station to the EV, and from the EV to the charging station. As described in further detail herein, the state of charge of the EV can be identified by the request or by the vehicle profile data in at least some examples. The charge profile can define a rate of charging (or discharging) that is provided between the charging station and the EV. The charge profile can identify additional aspects of the charging operation in some examples.

In an example, the operating schedule of the EV obtained at 220 indicates a departure time of the EV from the charging facility. In this example, the charge profile selected for the EV at 230 is capable of attaining a threshold state of charge of the EV by the charging operation prior to the departure time. This approach can ensure that the EV is charged to at least the threshold state of charge prior to departing the charging facility. The request obtained at 210 or the vehicle profile data obtained at 220 can identify the threshold state of charge of the EV that can be used to select the charge profile at 230.

As indicated at 232, the charge profile can be selected for the EV further based on one or more additional operating conditions, as described in further detail herein. As examples, the charge profile can be selected further based on one or more additional operating conditions, including: (1) a threshold state of charge of the EV to be attained by the charging operation, (2) a unit cost for electricity supplied to the charging facility by a utility, (3) an electricity demand on an electrical grid by which electricity is supplied to the charging facility, (4) rate of consumption of electricity by the charging facility, (5) a rate at which electricity is generated on-premises at the charging facility, (6) an amount of energy stored on-premises at the charging facility that is available for conversion to electricity, (7) whether bidirectional charging is supported by the EV and charging station.

At 240, the method includes outputting the charge profile selected for the EV. As indicated at 242, outputting the charge profile selected for the EV can include instructing the charge station to initiate charging of the EV according to the charge profile selected for the EV. As an example, outputting the charge profile selected for the EV at 240 can include sending communications to another computing system or device that identifies the charge profile. Such communications can be sent via one or more communications networks (e.g., 102 of FIG. 1), as described in further detail herein.

At 250, the method includes, responsive to the request, initiating charging (or discharging) of the EV via the charging station according to the charge profile selected for the EV. For example, communications sent at 242 as part of outputting the charge profile can take the form of a command or instruction to the charging station that initiates charging of the EV via the charging station. As another example, communications sent at 242 as part of outputting the charge profile can take the form of a command or instruction to the charging station that initiates discharging of the EV via the charging station.

As indicated at 252, the charging station can charge (or discharge) the EV according to the charge profile selected for the EV as part of the charging operation. For example, the charging station can supply electricity to the EV at a charging rate defined by the charge profile selected at 230. In the case of bidirectional charging between the EV and the charging station, charging of the EV previously described at operations 250 and 252 can alternatively include discharging the EV according to the charge profile to supply electricity to the charging facility via the charging station.

FIG. 3 is a schematic diagram depicting aspects of an example computing system 300 that can perform method 200 of FIG. 2. As previously described with reference to FIG. 2, method 200 can be performed at various locations within operating environment 100 of FIG. 1. As a first example, CPM service 180 executed by computing system 182 can perform method 200. In this example, computing system 182 is an example of computing system 300 of FIG. 3. As a second example, FM service 170 executed by computing system 172 can performed method 200. In this example, computing system 172 is an example of computing system 300 of FIG. 3. As a third example, charging stations, such as example charging station 142 of FIG. 1 can include computing system 300 of FIG. 3 as part of a control system of the charging station.

Computing system 300 includes one or more computing devices 310. Computing system 300 include a logic subsystem 312, a data storage subsystem 314, and an input / output (I / O) subsystem 316, which form part of the one or more computing devices 310.

Logic subsystem 312 includes one or more logic devices 320 configured to execute instructions and process data. Data storage subsystem 314 includes one or more data storage devices 322 having instructions 324 and data 326 stored thereon. Instructions 324 are executable by the one or more logic devices 320 of logic subsystem 312 to perform method 200 of FIG. 2. As part of executing instructions 324, the one or more logic devices 320 of logic subsystem 312 can process data 326 as described herein. Input / output subsystem 316 includes one or more communications interfaces 328 by which computing system 300 can communicate with other devices or computing systems.

Instructions 324 can include one or more computer executable programs 330. In at least some examples, the one or more programs 330 can include one or more application programming interfaces (APIs) 332 by which the one or more programs can communicate with other devices or computing systems.

As a first example in which method 200 of FIG. 2 is performed by CPM service 180 of FIG. 1, instructions 324 can be executed by logic subsystem 312 of computing system 300 to instantiate CPM service 180. In this example, computing system 182 of FIG. 1 takes the form of computing system 300 of FIG. 3, and instructions 324 define aspects of CPM service 180.

As a second example in which method 200 of FIG. 2 is performed by FM service 170 of FIG. 1, instructions 324 can be executed by logic subsystem 312 of computing system 300 to instantiate FM service 170. In this example, computing system 172 of FIG. 1 takes the form of computing system 300 of FIG. 3, and instructions 324 define aspects of FM service 170.

As a third example in which method 200 of FIG. 2 is performed by the charging station (e.g., 142) by which the charging operation is performed with respect to the EV (e.g., 120), instructions 324 can be executed by logic subsystem 312 of computing system 300 as part of a control system of the charging station. In this example, computing system 300 of FIG. 3 can form part of the charging station, and instructions 324 define aspects of the control system of the charging station.

Data 326 stored at storage subsystem 314 can include data received from various sources and/or data generated by computing system 300 performing method 200 of FIG. 2. As an example, computing system 300 can obtain a request 340 to initiate a charging operation with respect to an EV from a first source 342, as previously described with reference to operations 210 and 212 of method 200. Request 340 can include at least a vehicle identifier 350 of the EV. Request 340 can be obtained from first source 342 over a communications network via a communications interface of I / O subsystem 316. Vehicle identifier 350 of request 340 can be stored at data storage subsystem 314 of computing system 300 and form part of data 326.

Computing system 300 can obtain vehicle profile data 344 for the EV from a second source 346, as previously described with reference to operations 220 and 222 of method 200. Vehicle profile data 344 identifies at least an operating schedule 352 of the EV. Vehicle profile data 344 can be obtained from second source 346 over a communications network via a communications interface of I / O subsystem 316. In some examples, computing system 300 can send a request for the operating schedule that includes vehicle identifier 350 to second source 346, and the second source can return vehicle profile data 344 for the EV identified by vehicle identifier 350. Operating schedule 352 of vehicle profile data 344 can be stored at data storage subsystem 314 of computing system 300 and form part of data 326.

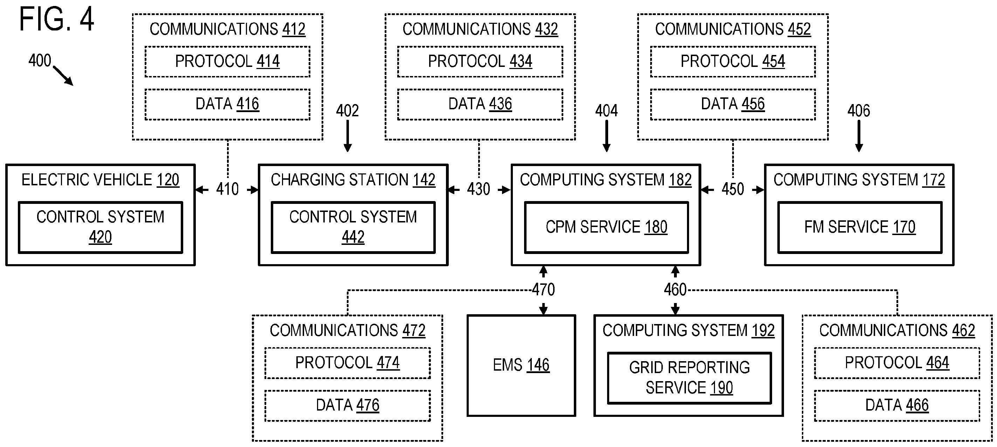

First source 342 differs from second source 346 in the example of FIG. 3. Examples of first source 342 and second source 346 are described in further detail with reference to FIGS. 4 - 6. In a first example where computing system 300 refers to computing system 182 that executes CPM service 180, first source 342 can refer to a control system of the EV or the charging station, and second source 346 can refer to FM service 170 executed by computing system 172. In a second example where computing system 300 refers to computing system 172 that executes FM service 170, first source 342 can refer to a control system of the EV or the charging station, or first source 342 can refer to CPM service 180. In this example, second source 346 can refer to local storage of computing system 300, such as data 326 of data storage subsystem 314.

As previously described with reference to operation 230 of method 200, computing system 300 can select a charge profile 354 for the EV from a plurality of supported charge profiles 356 based, at least in part, on operating schedule 352 and a state of charge 358 of the EV. As an example, state of charge 358 is identified by request 340 obtained from first source 342. As another example, state of charge 358 is identified by vehicle profile data 344 obtained from second source 346.

In some examples, the operating schedule 352 indicates a departure time 360 of the EV from the charging facility. Alternatively or additionally, departure time 360 can be computed by computing system 300 based on operating schedule 352 and a geolocation 362 of the EV or the charging station by which the charging operation is to be provided. In these examples, charge profile 354 selected for the EV is capable of attaining a threshold state of charge 364 and/or electrical energy demand 366 of the EV by the charging operation prior to the departure time. Computing system 300 can compute electrical energy demand 366, in some examples, based on state of charge 358 and threshold state of charge 364. Accordingly, computing system 300 can select charge profile 354 further based on one or more additional operating conditions that includes threshold state of charge 364 and/or electrical energy demand 366 of the EV to be attained by the charging operation. Request 340 obtained from first source 342 or vehicle profile data 344 obtained from second source 346 can identify threshold state of charge 364 or electrical energy demand 366 of the EV, in some examples.

Furthermore, in some examples, charge profile 354 can be selected by computing system 300 further based on one or more additional operating conditions, including: a unit cost for electricity supplied to the charging facility by a utility as identified by grid energy profile data 370, an electricity demand on an electrical grid by which electricity is supplied to the charging facility as identified by grid energy profile data 370, a rate of consumption of electricity by the charging facility as identified by facility energy profile data 372, a rate at which electricity is generated on-premises at the charging facility as identified by facility energy profile data 372, an amount of energy stored on-premises at the charging facility that is available for conversion to electricity as identified by facility energy profile data 372, whether bidirectional charging is supported by the EV (e.g., based on vehicle profile data 344) and the charging station, and/or other data 374.

Grid energy profile data 370, facility energy profile data 372, and other data 374 can be obtained by computing system 300 from one or more other sources 348. As an example, grid energy profile data 370 can be obtained by computing system 300 from grid reporting service 190 of FIG. 1, and facility energy profile data 372 can be obtained by computing system 300 from EMS 146 of FIG. 1.

In some examples, computing system 300 can obtain a charging station identifier 380 of the charging station by which the charging operation is to be provided with respect to the EV. As an example, charging station identifier 380 can be included in request 340 obtained from first source 342 or charging station identifier 380 can be obtained from other sources 348. Charging station identifier 380 can be used by computing system 300 to determine supported charge profiles 356 and/or geolocation 362, in some examples. Supported charge profiles 356 can identify or be based on whether the charging station supports bidirectional charging, as an example.

Computing system 300 can output charge profile 354 selected for the EV, as previously described with reference to operation 240 of method 200. As an example, charge profile 354 can be output by computing system 300 via one or more of communications interfaces 328 of I / O subsystem 316 as a communication directed to another device or computing system. As a first example in which computing system 300 refers to computing system 182 that executes CPM service 180, charge profile 354 can be communicated by computing system 300 to the charging station. As a second example in which computing system 300 refers to computing system 172 that executes FM service 170, charge profile 354 can be communicated by computing system 300 to CPM service 180. As a third example in which computing system 300 refers to a control system of the charging station, charge profile 354 can be communicated by computing system 300 to the EV (e.g., as part of negotiating the charge profile for the charging operation).

FIG. 4 is a schematic diagram depicting an example EV charging system 400 of operating environment 100 of FIG. 1 by which method 200 of FIG. 2 can be performed. In the example of FIG. 4, system 400 includes electric vehicle 120, charging station 142, EMS 146, FM service 170 of computing system 172, CPM service 180 of computing system 182, and grid reporting service 190, as previously described with reference to FIG. 1.

Method 200 of FIG. 2 can be performed at various locations within system 400 of FIG. 4. As a first example, method 200 can be performed by charging station 142, as indicated at 402. As a second example, method 200 can be performed by computing system 182 executing CPM service 180, as indicated at 404. As a third example, method 200 can be performed by computing system 172 executing FM service 170, as indicated at 406. As a fourth example, method 200 can be performed by two or more of charging station 142, computing system 182 executing CPM service 180, and/or computing system 172 executing FM service 170 in a distributed computing configuration.

In FIG. 4, EV 120 of FIG. 1 is schematically depicted electrically connected to charging station 142 via a charging cable 410. Charging station 142 can charge EV 120 as part of a charging operation by supplying electricity to the EV via charging cable 410. While charging cable 410 is described as an example of an electrical link between EV 120 and charging station 142, it will be understood that EV 120 can be charged by charging station 142 via a wireless electrical link in some examples. As previously described with reference to method 200 of FIG. 2, a charging operation can be performed via charging station 142 according to a charge profile that is selected for EV 120 in which the charge profile can define a charging rate of the EV.

EV 120 includes a control system 420 that can control operations of the EV, including charging operations with respect to charging stations such as charging station 142. For example, control system 420 can include or take the form of a computing system that includes one or more computing devices that executes an EV control program to control operations of EV 120.

Charging station 142 includes a control system 442 that can control operations of the charging station, including charging operations with respect to EV such as EV 120. For example, control system 442 can include or take the form of a computing system that includes one or more computing devices that executes a charging station control program to control operations of charging station 142. In examples where method 200 of FIG. 2 is performed in whole or in part by charging station 142 (e.g., as indicated at 402), control system 442 can perform the method by its computing system executing the charging station control program.

In some examples, control system 442 of charging station 142 can communicate with control system 420 of EV 120 over charging cable 410. In this example, charging cable 410 serves as an electrical link for conveying electricity and a communications link for conveying communications between charging station 142 and EV 120. Communications 412 between control system 420 and control system 442 over charging cable 410 can be formatted according to a communication protocol 414. As an example, communication protocol 414 can take the form of International Organization for Standardization (ISO) 15118-2. However, it will be understood that other suitable communication protocols can be used as protocol 414 for communications between EV 120 and charging station 142. As an example, communication protocols suitable for communications 412 between EV 120 and charging station 142 can define an application layer message set that supports communications and electrical transfer from the charging station to the EV, and can optionally support bidirectional energy transfer between the EV and the charging station. In the example of FIG. 4, control system 420 of EV 120 supports an EV-side implementation of protocol 414, and control system 442 of charging station 142 supports a station-side implementation of protocol 414.

Communications 412 between charging station 142 and EV 120 can include data 416. Examples of data 416 include vehicle identifier 350 of FIG. 3 for EV 120, charging station identifier 380 of FIG. 3 for charging station 142, operating schedule 352 of FIG. 3 for EV 120, departure time 360 of FIG. 3 for EV 120, state of charge 358 of FIG. 3 for EV 120, threshold state of charge 364 and/or energy demand 366 of FIG. 3 for EV 120 to be attained by a charging operation provided by charging station 142, supported charge profiles 356 of FIG. 3 for a charging operation between charging station 142 and EV 120, and charge profile 354 of FIG. 3 selected for EV 120.

In the example of FIG. 4, CPM service 180 of FIG. 1 is executed by computing system 182. CPM service 180 can communicate with control system 442 of charging station 142 via a communications link 430. Communications link 430 can take the form of a wired or wireless communications link that is established over a wired or wireless communications network of communications networks 102 of FIG. 1 between CPM service 180 and control system 442 of system 400 to enable communications 432 between the CPM service and control system 442. As an example, communications link 430 can be established over a wide area network of networks 102 of FIG. 1 in which CPM service 180 is remotely located off-premises from charge facility 140 of charging station 142. As another example, communications link 430 can be established over a local area network of networks 102 of FIG. 1 in which CPM service 180 is located on-premises at charging facility 140 that includes charging station 142.

In some examples, communications 432 between control system 442 of charging station 142 and CPM service 180 over communications link 430 can be formatted according to a communication protocol 434. As an example, protocol 434 can take the form of Open Charge Point Protocol (OCPP) 2.0.1. However, it will be understood that other suitable communication protocols can be used as protocol 434 for communications between control system 442 of charging station 142 and CPM service 180. As an example, communication protocols suitable for communications between charging stations and CPM service 180 can provide support for features such as remote control, maintenance, device model configurations, transactions, security, and interoperability. In the example of FIG. 4, control system 442 of charging station 142 supports a station-side implementation of protocol 434, and CPM service 180 supports a service-side implementation of protocol 434.

Communications 432 between charging station 142 and CPM service 180 can include data 436. Examples of data 436 include the vehicle identifier of EV 120, the charging station identifier of charging station 142, the operating schedule of EV 120, the departure time of EV 120, the state of charge of EV 120, the threshold state of charge and/or the electrical energy demand of EV 120 to be attained by the charging operation provided by charging station 142, the supported charge profiles for the charging operation between charging station 142 and EV 120, the charge profile selected for EV 120, grid energy profile data 370, facility energy profile data 372, and other data 374 of FIG. 3.

Additionally, in the example of FIG. 4, FM service 170 of FIG. 1 is executed by computing system 172. FM service 170 can communicate with CPM service 180 via a communications link 450. Communications link 450 can take the form of a wired or wireless link that is established over a wired or wireless communications network of networks 102 of FIG. 1 between CPM service 180 and FM service 170 to enable communications 452 between the CPM and FM services. As an example, communications link 450 can be established over a wide area network of networks 102 of FIG. 1 in which FM service 170 is remotely located from CPM service 180. As another example, communications link 450 can be established over a local area network of networks 102 in which CPM service 180 and FM service 170 are located in a common facility (e.g., a data center or the charging facility).

In some examples, communications 452 between FM service 170 and CPM service 180 over communications link 450 can be formatted according to a communication protocol 454. As an example, protocol 454 can take the form of the Open Charge Point Interface Protocol (OCPI) 2.2.1. However, it will be understood that other suitable communication protocols can be used as protocol 454 for communications 452 between FM service 170 and CPM service 180.

Communications 452 between CPM service 180 and FM service 170 can include data 456. Examples of data 456 include the vehicle identifier of EV 120, the charging station identifier of charging station 142, the operating schedule of EV 120, the departure time of EV 120, the state of charge of EV 120, the threshold state of charge and/or the electrical energy demand of EV 120 to be attained by the charging operation provided by charging station 142, the supported charge profiles for the charging operation between charging station 142 and EV 120, the charge profile selected for EV 120, grid energy profile data 370, facility energy profile data 372, and other data 374 of FIG. 3.

Additionally, in the example of FIG. 4, grid reporting service 190 of FIG. 1 is executed by computing system 192. Service 190 can communicate with CPM service 180 via a communications link 460. Communications link 460 can take the form of a wired or wireless link that is established over a wired or wireless communications network of networks 102 of FIG. 1 between CPM service 180 and service 190 to enable communications 462 between the CPM and grid reporting services. As an example, communications link 460 can be established over a wide area network of networks 102 of FIG. 1 in which service 190 is remotely located from CPM service 180.

In some examples, communications 462 between CPM service 180 and service 190 over communications link 460 can be formatted according to a communication protocol 464. As an example, protocol 464 can take the form of the Open Automated Demand Response (OpenADR) 2.0b. OpenADR is a messaging protocol that allows independent/distribution system operators (DSOs) to communicate with aggregators offering ancillary services through demand response. However, it will be understood that other suitable communication protocols can be used as protocol 464 for communications 462 between CPM service 180 and service 190. Other protocols that can be suitable for use as protocol 464 include IEEE 2030.5, VDV463, IEC 61850, Modbus, Message Queuing Telemetry Transport (MQTT), and Open Field Message Bus (OpenFMB). Communications 462 between CPM service 180 and service 190 can include data 466. Examples of data 466 include grid energy profile data 370 of FIG. 3.

Additionally, in the example of FIG. 4, EMS 146 of FIG. can communicate with CPM service 180 via a communications link 470. Communications link 470 can take the form of a wired or wireless link that is established over a wired or wireless communications network of networks 102 of FIG. 1 between CPM service 180 and EMS 146 to enable communications 472 between the CPM and the EMS. As an example, communications link 470 can be established over a wide area network of networks 102 of FIG. 1 in which EMS 146 is remotely located from CPM service 180. As another example, communications link 470 can be established over a local area network of networks 102 of FIG. 1 in which CPM service 180 is located on-premises at charging facility 140 with EMS 146.

In some examples, communications 472 between CPM service 180 and EMS 146 over communications link 470 can be formatted according to a communication protocol 474. As an example, protocol 474 can take the form of Institute of Electrical and Electronics Engineers (IEEE) 2030.5 for Smart Energy Profile Application Protocol Purchase Access via Subscription. However, it will be understood that other suitable communication protocols can be used as protocol 474 for communications 472 between CPM service 180 and EMS 146. Communications 472 between CPM service 180 and EMS 146 can include data 476. Examples of data 476 include facility energy profile data 372 of FIG. 3.

In an example where method 200 of FIG. 2 is performed at charging station 142 as indicated at 402, request 340 including vehicle identifier 350 of FIG. 3 can be obtained from EV 120 (as first source 342 of FIG. 3) by charging station 142 over communications link 410. In this example, vehicle profile data 344 of FIG. 3 can be obtained by charging station 142 from FM service 170 (as second source 346 of FIG. 3) via CPM service 180 over communications links 450 and 430. Additionally, in this example, grid energy profile data 370 and facility energy profile data 372 of FIG. 3 can be obtained by charging station 142 from service 190 and EMS 146 via CPM service 180 over communications links 430, 460, and 470.

In an example where method 200 of FIG. 2 is performed at CPM service 180 as indicated at 404, request 340 including vehicle identifier 350 of FIG. 3 can be obtained by the CPM service from EV 120 (as first source 342 of FIG. 3) via charging station 142 over communications links 410 and 430. In this example, vehicle profile data 344 of FIG. 3 can be obtained by CPM service 180 from FM service 170 (as second source 346 of FIG. 3) over communications link 430. Additionally, in this example, grid energy profile data 370 and facility energy profile data 372 of FIG. 3 can be obtained by CPM service 180 from service 190 and EMS 146 over communications links 460 and 470, respectively. CPM service 180 can output charge profile 356 of FIG. 3 that is selected for the EV to charging station 142 via communications link 430.

In an example where method 200 of FIG. 2 is performed at FM service 170 as indicated at 406, request 340 including vehicle identifier 350 of FIG. 3 can be obtained from EV 120 (as first source 342 of FIG. 3) by the FM service via charging station 142 and CPM service 180 over communications links 410, 430, and 450. In this example, vehicle profile data 344 of FIG. 3 can be obtained by FM service 170 from local data storage (as second source 346 of FIG. 3). Additionally, in this example, grid energy profile data 370 and facility energy profile data 372 of FIG. 3 can be obtained by FM service 170 via CPM service 180 from service 190 and EMS 146 over communications links 450, 460, and 470. FM service 170 can output charge profile 356 of FIG. 3 that is selected for the EV to CPM service 180 via communications link 450, and the CPM service can forward the charge profile to charging station 142 via communications link 430.

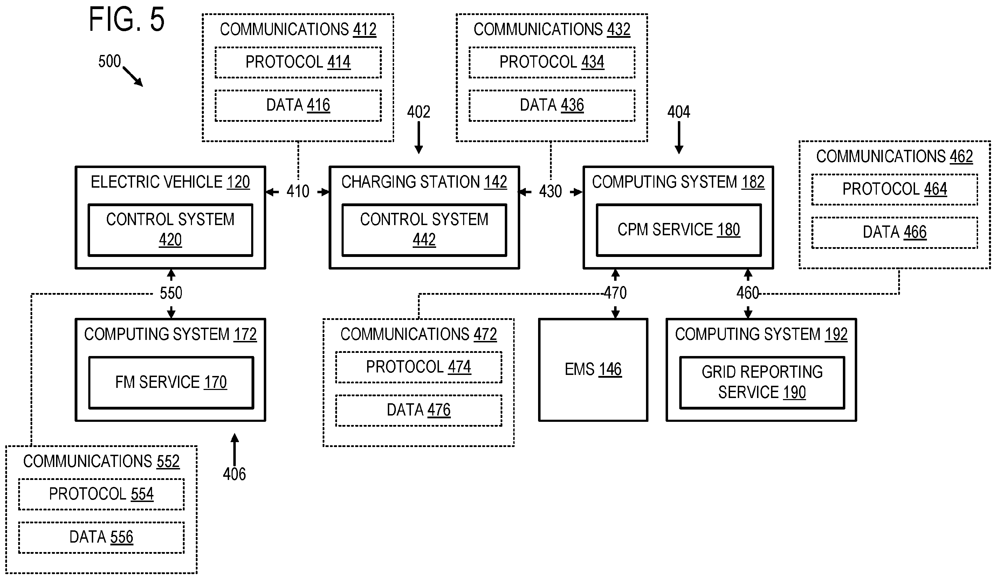

FIG. 5 is a schematic diagram depicting an example EV charging system 500 of operating environment 100 of FIG. 1 by which method 200 of FIG. 2 can be performed. EV charging system 500 is similar to EV charging system 400 previously described with reference to FIG. 4 with the exception of communications with respect to FM service 170. In the example of system 500, FM service communicates with EV 120 over a communications link 550.

In system 500, FM service 170 can communicate with EV 120 via a communications link 550. Communications link 550 can take the form of a wireless link that is established over a wireless communications network of networks 102 of FIG. 1 between FM service 170 and EV 120 to enable communications 552 between the FM service and the EV. As an example, communications link 550 can be established over a wide area network of networks 102 of FIG. 1.

In some examples, communications 552 between FM service 170 and EV 120 over communications link 550 can be formatted according to a communication protocol 554. As an example, protocol 554 can take the form of the Message Queue Telemetry Transport (MQTT) protocol, which is used in telematics to transmit data between vehicles and remote computing systems. However, it will be understood that other suitable communication protocols can be used as protocol 554 for communications 552 between FM service 170 and EV 120.

Communications 552 between FM service 170 and EV 120 can include data 556. Examples of data 556 include the vehicle identifier of EV 120, the charging station identifier of charging station 142, the operating schedule of EV 120, the departure time of EV 120, the state of charge of EV 120, the threshold state of charge and/or the electrical energy demand of EV 120 to be attained by the charging operation provided by charging station 142, the supported charge profiles for the charging operation between charging station 142 and EV 120, the charge profile selected for EV 120, grid energy profile data 370, facility energy profile data 372, and other data 374 of FIG. 3.

In an example where method 200 of FIG. 2 is performed at charging station 142 of system 500 as indicated at 402, request 340 including vehicle identifier 350 of FIG. 3 can be obtained from EV 120 (as first source 342 of FIG. 3) by charging station 142 over communications link 410. In this example, vehicle profile data 344 of FIG. 3 can be obtained by charging station 142 from FM service 170 (as second source 346 of FIG. 3) via EV 120 over communications links 550 and 410. Additionally, in this example, grid energy profile data 370 and facility energy profile data 372 of FIG. 3 can be obtained by charging station 142 from service 190 and EMS 146 via CPM service 180 over communications links 430, 460, and 470.

In an example where method 200 of FIG. 2 is performed at CPM service 180 of system 500 as indicated at 404, request 340 including vehicle identifier 350 of FIG. 3 can be obtained by the CPM service from EV 120 (as first source 342 of FIG. 3) via charging station 142 over communications links 410 and 430. In this example, vehicle profile data 344 of FIG. 3 can be obtained by CPM service 180 from FM service 170 (as second source 346 of FIG. 3) via EV 120 over communications links 550, 410, and 430. Additionally, in this example, grid energy profile data 370 and facility energy profile data 372 of FIG. 3 can be obtained by CPM service 180 from service 190 and EMS 146 over communications links 460 and 470, respectively. CPM service 180 can output charge profile 356 of FIG. 3 that is selected for the EV to charging station 142 via communications link 430.

In an example where method 200 of FIG. 2 is performed at FM service 170 of system 500 as indicated at 406, request 340 including vehicle identifier 350 of FIG. 3 can be obtained from EV 120 (as first source 342 of FIG. 3) by the FM service over communications link 550. In this example, vehicle profile data 344 of FIG. 3 can be obtained by FM service 170 from local data storage (as second source 346 of FIG. 3). Additionally, in this example, grid energy profile data 370 and facility energy profile data 372 of FIG. 3 can be obtained by FM service 170 via CPM service 180, charging station 142, and EV 120 from service 190 and EMS 146 over communications links 460, and 470, 430, 410, and 550. FM service 170 can output charge profile 356 of FIG. 3 that is selected for the EV to EV 120 via communications link 550, and the EV can forward the charge profile to charging station 142 via communications link 410.

FIG. 6 is a schematic diagram depicting an example EV charging system 600 of operating environment 100 of FIG. 1 by which method 200 of FIG. 2 can be performed. EV charging system 600 includes features similar to EV charging systems 400 and 500 previously described with reference to FIGS. 4 and 5. However, in the example of system 600, FM service 170 can communicate with EV 120 via on-premises network device 148 of FIG. 1. For example, in system 600, FM service 170 can communicate with network device 148 via a communications link 650, and network device 148 can communicate with EV 120 via communications link 680. In system 600, communications link 650 can be established over a wireless local area network of communications networks 102 of FIG. 1, and communications link 680 can be established over a wired or wireless wide area network of communications networks 102.

Additionally, in system 600, network device 148 can communicate with CPM service 180 via communications link 690. In system 600, communications link 690 can be established over a wired or wireless local area network or wide area network, depending on whether CPM service 180 is located on-premises at the charging facility with network device 148 or off-premises the charging facility.

Furthermore, in some examples, FM service 170 can communicate with CPM service 180 via communications link 692 in system 600. Communications link 692 can be established over a wired or wireless wide area network in system 600.

In some examples, communication links 650, 680, 690, and 692 can support communications 652 that are formatted according to a communications protocol 654. As an example, protocol 654 can take the form of the MQTT protocol. However, it will be understood that other suitable communication protocols can be used as protocol 654. In some examples, network device 148 can include a computing system that routes communications between or among control system 420 of EV 120, FM service 170, and CPM service 180.

Communications 652 can include data 556. Examples of data 656 include the vehicle identifier of EV 120, the charging station identifier of charging station 142, the operating schedule of EV 120, the departure time of EV 120, the state of charge of EV 120, the threshold state of charge and/or the electrical energy demand of EV 120 to be attained by the charging operation provided by charging station 142, the supported charge profiles for the charging operation between charging station 142 and EV 120, the charge profile selected for EV 120, grid energy profile data 370, facility energy profile data 372, and other data 374 of FIG. 3.

In an example where method 200 of FIG. 2 is performed at charging station 142 of system 600 as indicated at 402, request 340 including vehicle identifier 350 of FIG. 3 can be obtained from EV 120 (as first source 342 of FIG. 3) by charging station 142 over communications link 410. In this example, vehicle profile data 344 of FIG. 3 can be obtained by charging station 142 from FM service 170 (as second source 346 of FIG. 3) via EV 120 and network device 148 over communications links 410, 680, and 650. Additionally, in this example, grid energy profile data 370 and facility energy profile data 372 of FIG. 3 can be obtained by charging station 142 from service 190 and EMS 146 via CPM service 180 over communications links 430, 460, and 470.

In an example where method 200 of FIG. 2 is performed at CPM service 180 of system 600 as indicated at 404, request 340 including vehicle identifier 350 of FIG. 3 can be obtained by the CPM service from EV 120 (as first source 342 of FIG. 3) via charging station 142 over communications links 410 and 430. Alternatively, in system 600, request 340 can be obtained by CPM service 180 from EV 120 via network device 148 and/or FM service 170. Furthermore, in system 600, vehicle profile data 344 of FIG. 3 can be obtained by CPM service 180 from FM service 170 (as second source 346 of FIG. 3) via network device 148 or directly via communications link 692. Additionally, in this example, grid energy profile data 370 and facility energy profile data 372 of FIG. 3 can be obtained by CPM service 180 from service 190 and EMS 146 over communications links 460 and 470, respectively. CPM service 180 can output charge profile 356 of FIG. 3 that is selected for the EV to charging station 142 via communications link 430.

In an example where method 200 of FIG. 2 is performed at FM service 170 of system 500 as indicated at 406, request 340 including vehicle identifier 350 of FIG. 3 can be obtained by the FM service from EV 120 (as first source 342 of FIG. 3) via network device 148. In this example, vehicle profile data 344 of FIG. 3 can be obtained by FM service 170 from local data storage (as second source 346 of FIG. 3). Additionally, in this example, grid energy profile data 370 and facility energy profile data 372 of FIG. 3 can be obtained by FM service 170 via CPM service 180 over communication link 692, or communication links 690 and 650 that traverses network device 148. FM service 170 can output charge profile 356 of FIG. 3 that is selected for the EV to EV 120 via network device 148, and the EV can forward the charge profile to charging station 142 via communications link 410.

The methods and operations described herein can be performed by a computing system of one or more computing devices. In particular, such methods and operations may be implemented as a computer-application program or service, an application-programming interface (API), a library, and/or other computer-program product, as examples.

The logic subsystem described herein includes one or more physical devices configured to execute instructions. For example, the logic machine can be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result. The logic subsystem can include one or more processors configured to execute software instructions. Additionally or alternatively, the logic subsystem can include one or more hardware or firmware logic machines configured to execute hardware or firmware instructions. Processors of the logic subsystem can be single-core or multi-core, and the instructions executed thereon may be configured for sequential, parallel, and/or distributed processing. Individual components of the logic subsystem optionally can be distributed among two or more separate devices, which may be remotely located and/or configured for coordinated processing. Aspects of the logic subsystem can be virtualized and executed by remotely accessible, networked computing devices configured in a cloud-computing configuration.

The data storage subsystem described herein includes one or more physical devices configured to hold instructions and other data executable by the logic subsystem to implement the methods and operations described herein. When such methods and operations are implemented, the state of the data storage subsystem can be transformed-e.g., to hold different data. The data storage subsystem can include removable and/or built-in devices. The data storage subsystem can include optical memory, semiconductor memory (e.g., RAM, EPROM, EEPROM, etc.), and/or magnetic memory, as examples. The data storage subsystem can include volatile, nonvolatile, dynamic, static, read/write, read-only, random-access, sequential-access, location-addressable, file-addressable, and/or content-addressable devices.

Aspects of the logic subsystem and data storage subsystem of a computing system can be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The term "program" is used herein to describe an aspect of a computing system implemented to perform a particular function. In some cases, a program can be instantiated via the logic subsystem of the computing system executing instructions held by the data storage subsystem. It will be understood that different programs can be instantiated from the same application, service, code block, object, library, routine, API, function, etc. Likewise, the same program can be instantiated by different applications, services, code blocks, objects, routines, APIs, functions, etc. The term "program" can encompass individual or groups of executable files, data files, libraries, drivers, scripts, database records, etc. The term "service" as used herein can describe an application program executable across multiple sessions. A service may be available to one or more system components, programs, and/or other services. In some implementations, a service may run on one or more server-computing devices.

The present disclosure comprises configurations according to the following examples.

Example 1. A method performed by a computing system that includes one or more computing devices, the method comprising: obtaining, from a first source, a request to initiate a charging operation with respect to an electric vehicle (EV) operated by a fleet operator via a charging station of a charging facility operated by a charge point operator, wherein the request includes at least a vehicle identifier of the EV; obtaining, from a second source, vehicle profile data for the EV over a communications network based on the vehicle identifier, wherein the vehicle profile data identifies at least an operating schedule of the EV as defined by the fleet operator; selecting a charge profile for the EV from a plurality of supported charge profiles based, at least in part, on the operating schedule and a state of charge of the EV; and outputting the charge profile selected for the EV.

Example 2. The method of Example 1, further comprising: responsive to the request, initiating charging of the EV via the charging station according to the charge profile selected for the EV.

Example 3. The method of any of Examples 1-2, wherein the request is formatted according to a first communications protocol, and the request is obtained by receiving the request over a wired electrical link between the EV and the charging station; and wherein the vehicle profile data obtained for the EV is formatted according to a second communications protocol that differs from the first protocol, and the communications network includes a wide area network.

Example 4. The method of Example 3, wherein the second source forms part of a fleet management service hosted at a remote server system located off-premises from the charging facility.

Example 5. The method of Example 4, wherein the operating schedule of the EV is defined by the fleet operator via the fleet management service.

Example 6. The method of any of Examples 1-5, wherein the request is initiated at the EV as the first source; wherein obtaining the request includes receiving the request over a wireless communications link of a local area network via a network device that is located on-premises at the charging facility.

Example 7. The method of Example 6, wherein obtaining the vehicle profile data for the EV includes the network device obtaining the vehicle profile data from the second source over a wide area network of the communications network.

Example 8. The method of any of Examples 1-7, wherein the charge profile is selected further based on one or more additional operating conditions, including: (1) a threshold state of charge of the EV to be attained by the charging operation, (2) a unit cost for electricity supplied to the charging facility by a utility, (3) an electricity demand on an electrical grid by which electricity is supplied to the charging facility, (4) rate of consumption of electricity by the charging facility, (5) a rate at which electricity is generated on-premises at the charging facility, (6) an amount of energy stored on-premises at the charging facility that is available for conversion to electricity, (7) whether bidirectional charging is supported by the EV and charging station.

Example 9. The method of any of Examples 1-8, wherein the request or the vehicle profile data identifies the state of charge of the EV.

Example 10. The method of any of Examples 1-9, wherein the operating schedule indicates a departure time of the EV from the charging facility; wherein the charge profile selected for the EV is capable of attaining a threshold state of charge or an electrical energy demand of the EV by the charging operation prior to the departure time.

Example 11. The method of Example 10, wherein the request or the vehicle profile data identifies the threshold state of charge or the electrical energy demand of the EV.

Example 12. A computing system that includes one or more computing device, the computing system comprising: a computer data storage device having instructions stored thereon executable by one or more logic devices of the computing system to: obtain, from a first source, a request to initiate a charging operation with respect to an electric vehicle (EV) operated by a fleet operator via a charging station of a charging facility operated by a charge point operator, wherein the request includes at least a vehicle identifier of the EV; obtain, from a second source, vehicle profile data for the EV over a communications network based on the vehicle identifier, wherein the vehicle profile data identifies at least an operating schedule of the EV as defined by the fleet operator; select a charge profile for the EV from a plurality of supported charge profiles based, at least in part, on the operating schedule and a state of charge of the EV; and output the charge profile selected for the EV.

Example 13. The computing system of Example 12, wherein the instructions are further executable by the one or more logic devices to: responsive to the request, initiate charging of the EV via the charging station according to the charge profile selected for the EV.

Example 14. The computing system of any of Examples 12-13, wherein the request is formatted according to a first communications protocol, and the request is obtained by receiving the request over a wired electrical link between the EV and the charging station; and wherein the vehicle profile data obtained for the EV is formatted according to a second communications protocol that differs from the first protocol, and the communications network includes a wide area network.

Example 15. The computing system of Example 14, wherein the second source forms part of a fleet operator management service hosted at a remote server system located off-premises from the charging facility.

Example 16. The computing system of Example 15, wherein the operating schedule of the EV is defined by the fleet operator via the fleet operator management service.

Example 17. The computing system of any of Examples 12-16, wherein the request is initiated at the EV as the first source; wherein the request is obtained by receiving the request over a wireless communications link of a local area network via a network device that is located on-premises at the charging facility.

Example 18. The computing system of Example 17, wherein the vehicle profile data for the EV is obtained by the network device obtaining the vehicle profile data from the second source over a wide area network of the communications network.

Example 19. The computing system of any of Examples 12-18, wherein the charge profile is selected further based on one or more additional operating conditions, including: (1) a threshold state of charge of the EV to be attained by the charging operation, (2) a unit cost for electricity supplied to the charging facility by a utility, (3) an electricity demand on an electrical grid by which electricity is supplied to the charging facility, (4) rate of consumption of electricity by the charging facility, (5) a rate at which electricity is generated on-premises at the charging facility, (6) an amount of energy stored on-premises at the charging facility that is available for conversion to electricity, (7) whether bidirectional charging is supported by the EV and charging station.

Example 20. The computing system of any of Examples 12-19, wherein the request or the vehicle profile data identifies the state of charge of the EV.

Example 21. The computing system of any of Examples 12-20, wherein the operating schedule indicates a departure time of the EV from the charging facility; wherein the charge profile selected for the EV is capable of attaining a threshold state of charge or an electrical energy demand of the EV by the charging operation prior to the departure time.

Example 22. The computing system of Example 21, wherein the request or the vehicle profile data identifies the threshold state of charge or the electrical energy demand of the EV.

Example 23. An article of manufacture, comprising: a computer data storage device having instructions stored thereon executable by one or more logic devices to: obtain, from a first source, a request to initiate a charging operation with respect to an electric vehicle (EV) operated by a fleet operator via a charging station of a charging facility operated by a charge point operator, wherein the request includes at least a vehicle identifier of the EV; obtain, from a second source, vehicle profile data for the EV over a communications network based on the vehicle identifier, wherein the vehicle profile data identifies at least an operating schedule of the EV as defined by the fleet operator; select a charge profile for the EV from a plurality of supported charge profiles based, at least in part, on the operating schedule and a state of charge of the EV; and output the charge profile selected for the EV.

It will be understood that the configurations and approaches described herein are exemplary in nature, and that the specific examples are not to be considered in a limiting sense, because numerous variations are possible. The specific methods described herein can represent one or more of any number of processing strategies. As such, various acts illustrated and/or described can be performed in the sequence illustrated and/or described, in other sequences, in parallel, or omitted. Likewise, the order of the above-described operations may be changed.

The subject matter of the present disclosure includes all novel and non-obvious combinations and sub-combinations of the various methods, operations, systems, configurations, and other features, functions, acts, and/or properties disclosed herein, as well as any and all equivalents thereof.

## Claims

1. A method performed by a computing system that includes one or more computing devices, the method comprising:
obtaining, from a first source, a request to initiate a charging operation with respect to an electric vehicle (EV) operated by a fleet operator via a charging station of a charging facility operated by a charge point operator, wherein the request includes at least a vehicle identifier of the EV;
obtaining, from a second source, vehicle profile data for the EV over a communications network based on the vehicle identifier, wherein the vehicle profile data identifies at least an operating schedule of the EV as defined by the fleet operator;
selecting a charge profile for the EV from a plurality of supported charge profiles based, at least in part, on the operating schedule and a state of charge of the EV; and
outputting the charge profile selected for the EV.

2. The method of claim 1, further comprising:
responsive to the request, initiating charging of the EV via the charging station according to the charge profile selected for the EV.

3. The method of claim 1, wherein the request is formatted according to a first communications protocol, and the request is obtained by receiving the request over a wired electrical link between the EV and the charging station; and
wherein the vehicle profile data obtained for the EV is formatted according to a second communications protocol that differs from the first protocol, and the communications network includes a wide area network.

4. The method of claim 3, wherein the second source forms part of a fleet management service hosted at a remote server system located off-premises from the charging facility.

5. The method of claim 4, wherein the operating schedule of the EV is defined by the fleet operator via the fleet management service.

6. The method of claim 1, wherein the request is initiated at the EV as the first source;
wherein obtaining the request includes receiving the request over a wireless communications link of a local area network via a network device that is located on-premises at the charging facility.

7. The method of claim 6, wherein obtaining the vehicle profile data for the EV includes the network device obtaining the vehicle profile data from the second source over a wide area network of the communications network.

8. The method of claim 1, wherein the charge profile is selected further based on one or more additional operating conditions, including:
(1) a threshold state of charge of the EV to be attained by the charging operation,
(2) a unit cost for electricity supplied to the charging facility by a utility,
(3) an electricity demand on an electrical grid by which electricity is supplied to the charging facility,
(4) rate of consumption of electricity by the charging facility,
(5) a rate at which electricity is generated on-premises at the charging facility,
(6) an amount of energy stored on-premises at the charging facility that is available for conversion to electricity,
(7) whether bidirectional charging is supported by the EV and the charging station.

9. The method of claim 1, wherein the request or the vehicle profile data identifies the state of charge of the EV.

10. The method of claim 1, wherein the operating schedule indicates a departure time of the EV from the charging facility;
wherein the charge profile selected for the EV is capable of attaining a threshold state of charge or an electrical energy demand of the EV by the charging operation prior to the departure time.

11. The method of claim 10, wherein the request or the vehicle profile data identifies the threshold state of charge or the electrical energy demand of the EV.

12. A computing system that includes one or more computing device, the computing system comprising:
a computer data storage device having instructions stored thereon executable by one or more logic devices of the computing system to:
carry out the method according to any preceding claim.
